# EUROPÄISCHE PATENTSCHRIFT

(11) **EP 0 805 265 B1**
(45) Veröffentlichungstag und Bekanntmachung des Hinweises auf die Patenterteilung: **12.11.2003**
(21) Anmeldenummer: 97105007.5
(22) Anmeldetag: 25.03.1997
(51) Int. Cl.: F01N 3/08, F01N 3/28, F01N 3/20

(54) **Abgaskatalysatoranlage für einen Dieselmotor**
Catalytic converter for Diesel engine exhausts
Catalyseur des gaz d'échappement d'un moteur diesel

(30) Priorität: 02.05.1996 DE 19617563
(43) Veröffentlichungstag der Anmeldung: 05.11.1997
(73) Patentinhaber: DaimlerChrysler AG, 70567 Stuttgart (DE)
(72) Erfinder: Langer, Hans-Joachim, 71686 Remseck (DE); Jokl, Bernhard, 73765 Neuhausen (DE)

(56) Entgegenhaltungen:
- EP-A- 0 622 107
- DE-A- 4 032 085
- DE-A- 4 440 833
- US-A- 5 296 198

## Beschreibung

Die Erfindung bezieht sich auf eine Abgaskatalysatoranlage für einen Dieselmotor, der Mittel zur Anreicherung des Dieselmotorabgases mit Kohlenwasserstoffen besitzt, die eine Stickoxidumwandlung im Katalysator unterstützen.

Es ist bekannt, daß die Umwandlung, d.h. die Reduktion, von im Abgas enthaltenen Stickoxiden bei Dieselmotoren gegenüber Otto-Motoren dadurch erschwert ist, daß diese Motoren nicht um den stöchiometrischen Punkt des Kraftstoff/Luft-Verhältnisses herum, sondern stets mit merklichem Sauerstoffüberschuß betrieben werden. Es wurden daher für Dieselmotoren bereits Mittel zur Anreicherung des Dieselmotorabgases mit Kohlenwasserstoffen vorgeschlagen, welche die NOₓ-Konversion im Dieselkatalysator unterstützen, z.B. in Form einer eigenständigen Eindüseinrichtung zum Einspritzen der Kohlenwasserstoffe in den Abgastrakt oder in Form eines Nacheinspritzvorgangs, bei dem zusätzlicher Kraftstoff nach dem eigentlichen Verbrennungsvorgang in den Brennraum eingespritzt wird und dann unverbrannt in den Abgastrakt gelangt. Mit dieser HC-Anreicherung läßt sich die Aktivität eines z.B. als sogenannter DeNOₓ-Katalysator ausgelegten Dieselkatalysators hinsichtlich NOₓ-Konversion in einem begrenzten Temperaturbereich verbessern, dessen Lage auf der Temperaturskala vom gewählten Katalysatormaterial und der gewählten Katalysatorbeladungsdichte abhängt, während im Gegensatz dazu bei Otto-Motoren die NOₓ-Konversion ab einer gewissen Mindesttemperatur annähernd konstant bleibt.

In der Offenlegungsschrift EP 0 622 107 A2 ist eine zweistufige Abgaskatalysatoranlage für einen Dieselmotor beschrieben, bei der eine in Abgasströmungsrichtung vordere Katalysatorstufe zur Niedertemperaturumsetzung von Kohlenwasserstoffen und löslichen organischen Bestandteilen ausgelegt und zu diesem Zweck mit Platinmaterial beladen ist, während eine nachfolgende Katalysatorstufe zur Hochtemperaturumsetzung der Kohlenwasserstoffe und der löslichen organischen Bestandteile ausgelegt und zu diesem Zweck mit Palladiummaterial beladen ist.

Zur Verbesserung der Abgaskatalysatorfunktion während Kaltstartbetriebsphasen, insbesondere bei Otto-Motoren, ist es bekannt, in wenigstens einer Katalysatorstufe ein HC-Adsorbermaterial vorzusehen. Damit sollen die im Abgas enthaltenen Kohlenwasserstoffe, die in der Kaltstartphase wegen der in diesem Zeitraum noch geringen Katalysatoraktivität nicht vollständig umgesetzt werden können, zwischengespeichert werden, um dann nach beendeter Kaltstartphase desorbiert und umgewandelt werden zu können. Derartige Anlagen sind beispielsweise in den Offenlegungsschriften DE 43 26 120 A1, DE 44 19 776 A1 und DE 44 36 754 A1 sowie in der Patentschrift US 5 296 198 offenbart.

In der Offenlegungsschrift DE 40 32 085 A1 ist eine Katalysatoranordnung zur Reduktion von Stickoxiden in einem Abgas offenbart, die wenigstens zwei in Strömungsrichtung des Abgases hintereinanderliegende Katalysatorbetten aus unterschiedlichen Katalysatormaterialien zur Stickoxidreduktion beinhaltet. Dabei weisen die unterschiedlichen Katalysatormaterialien ihre stärkste katalytische Wirkung in verschiedenen, benachbarten Teilbereichen des relevanten Abgastemperaturbereichs auf.

In der Offenlegungsschrift DE 44 40 833 A1 ist eine Abgaskatalysatoranlage nach dem Oberbegriff des Anspruchs 1 beschrieben. Bei dieser bekannten Anlage sind die beiden Katalysatorstufen in Abgasströmungsrichtung beabstandet an Stellen mit relativ stark unterschiedlichen Abgaseintrittstemperaturen angeordnet und dabei in ihrem Aufbau und ihren Raumgeschwindigkeiten entsprechend den relativ stark unterschiedlichen Abgaseintrittstemperaturen ausgelegt, d.h. die in Abgasströmungsrichtung vorgeschaltete Katalysatorstufe, die nach Art eines Start-Katalysators brennraumnah angeordnet ist, ist zur NOₓ-Umwandlung im dort höheren Temperaturbereich ausgelegt, während die brennraumferner angeordnete, in Abgasströmungsrichtung nachgeschaltete Katalysatorstufe zur NOₓ-Umwandlung im dort niedrigeren Abgastemperaturbereich ausgelegt ist.

Der Erfindung liegt als technisches Problem die Bereitstellung einer Abgaskatalysatoranlage der eingangs genannten Art zugrunde, mit der eine gute Konversion von im Abgas eines Dieselmotors enthaltenen Stickoxiden in einem großen Temperaturbereich erzielt wird.

Die Erfindung löst dieses Problem durch die Bereitstellung einer Abgaskatalysatoranlage mit den Merkmalen des Anspruchs 1. Diese Anlage enthält Mittel zur HC-Anreicherung des Dieselmotorabgases zwecks Unterstützung der Stickoxidumwandlung sowie wenigstens zwei hintereinander angeordnete Katalysatorstufen, von denen eine in Abgasströmungsrichtung vordere Stufe zur NOₓ-Umwandlung in einem ersten, vergleichsweise niedrigen Temperaturbereich und eine der ersten nachfolgende, zweite Stufe zur NOₓ-Umwandlung in einem dagegen höheren Temperaturbereich ausgelegt ist. Dazu enthalten die Katalysatorstufen eine jeweils geeignete Katalysatormaterialbeladung, z.B. unterschiedliche Katalysatormaterialien oder dasselbe Katalysatormaterial mit unterschiedlicher Beladungsdichte. Mit der ersten, vorderen Katalysatorstufe läßt sich z.B. bei Wahl einer sehr hohen Beladungsdichte des Katalysatormaterials bereits bei vergleichsweise niedrigen Temperaturen und daher schon in der Kaltstartphase eine effektive NOₓ-Konversion erzielen. Diese Konversion bringt gleichzeitig erwünschte Wärmeenergie in das Abgas ein, die in der oder den nachfolgenden Katalysatorstufen genutzt werden kann. Mit der nachgeschalteten zweiten Katalysatorstufe wird eine effektive NOₓ-Konversion bei höheren Temperaturen gewährleistet, bei denen die NOₓ-Konversionsrate der ersten Stufe bereits wieder merklich abgefallen ist. Charakteristischerweise ist die erste Katalysatorstufe so ausgelegt, daß in ihr nicht schon die gesamte, im eintretenden Abgas enthaltene HC-Anreicherungsmenge, sondern nur ein erster Teil derselben umgesetzt wird, so daß für die nachfolgende, zweite Katalysatorstufe noch ein ausreichender, restlicher Teil der HC-Anreicherungsmenge verbleibt, um auch in dieser Stufe eine effektive, durch die Kohlenwasserstoffe unterstützte NOₓ-Reduktion zu ermöglichen.

Eine nach Anspruch 2 weitergebildete Anlage besitzt eine in Abgasströmungsrichtung der zweiten nachgeschaltete dritte Katalysatorstufe, die mit einer gegenüber der zweiten Stufe höheren Katalysatoraktivität hinsichtlich NOₓ-Konversion ausgelegt ist. Es zeigt sich, daß dieser Katalysatoraufbau eine sehr effektive NOₓ-Konversion über einen weiten Temperaturbereich hinweg bewirkt.

Bei einer nach Anspruch 3 weitergebildeten Anlage ist wenigstens die zweite Katalysatorstufe mit einem HC-Adsorbermaterial versehen, um Kohlenwasserstoffe aus dem HC-angereicherten Abgas in Motorbetriebsphasen zwischenspeichern zu können, in denen das Abgas vergleichsweise wenig Stickoxide enthält und daher weniger Kohlenwasserstoffe zu deren Umwandlung benötigt werden. Die zwischengespeicherten Kohlenwasserstoffe stehen dann in Betriebsphasen mit höheren Stickoxidkonzentrationen im Abgas, z.B. bei Betriebsphasen mit höher Motorlast, zur effektiven Konversion dieser erhöhten Stickoxidmenge zur Verfügung. Zudem kann eine HC-Zwischenspeicherung auch während der Kaltstartphase des Motors erfolgen, während der die NOₓ-Umwandlungsaktivität der wenigstens einen Katalysatorstufe, welche der vordersten Stufe folgt, noch relativ gering ist.

Eine nach Anspruch 4 weitergebildete Anlage umfaßt zwei aufeinanderfolgende, voneinander getrennte Katalysatoreinheiten. Beide Einheiten sind jeweils wenigstens zweistufig mit der ersten, bereits in einem relativ niedrigen Temperaturbereich hinsichtlich NOₓ-Konversion wirksamen Stufe und mit der zweiten, in einem höheren Temperaturbereich NOₓ-konversionsaktiven Stufe aufgebaut. Dabei ist die in Abgasströmungsrichtung vordere Katalysatoreinheit motornah angeordnet, damit das Abgas dort schon in der Kaltstartphase des Motors zu einem möglichst frühen Zeitpunkt mit einer Temperatur eintritt, bei der deren erste Katalysatorstufe eine effektive NOₓ-Konversion bewirkt.

Eine Weiterbildung der letztgenannten Anlage gemäß Anspruch 5 gewährleistet mittels einer parallel zu den mit Katalysatormaterial beladenen Zonen der ersten Katalysatoreinheit im Abgasstrang angeordneten Umgehungsleitung, daß auch der zweiten Katalysatoreinheit stets noch Abgas zugeführt wird, das eine ausreichende HC-Anreicherungsmenge zwecks effektiver NOₓ-Konversion in dieser hinteren Katalysatoreinheit enthält, selbst wenn die Kohlenwasserstoffe, die in dem Abgasanteil enthalten sind, der durch die katalytisch aktiven Zonen der ersten Katalysatoreinheit hindurchströmt, dort vollständig umgesetzt wurden.

Zur Gewährleistung der Zuführung einer ausreichenden HC-Abgasanreicherungsmenge zu einer nachfolgenden Katalysatorstufe ist bei einer nach Anspruch 6 weitergebildeten Anlage in wenigstens einer vorgeschalteten Katalysatorstufe ein integrierter, durchgehender Längsströmungskanal vorgesehen, der nicht mit NOₓ-konversionsaktivem Katalysatormaterial beladen ist. Die in demjenigen Abgasanteil, der durch diesen Längsströmungskanal strömt, enthaltene HC-Anreicherungsmenge wird folglich in dieser wenigstens einen vorgeschalteten Katalysatorstufe nicht verbraucht und steht der nachfolgenden Stufe zur Verfügung.

Mit einer nach Anspruch 7 weitergebildeten Anlage wird die Verbrennung von auf der Katalysatoroberfläche angelagerten festen Rußpartikeln ermöglicht, was zu einer merklichen Verringerung der festen Rußpartikelemission von Dieselmotoren beiträgt.

Bevorzugte Ausführungsformen der Erfindung sind in den Zeichnungen dargestellt und werden nachfolgend beschrieben. Hierbei zeigen:
- Fig. 1: eine schematische Blockdiagrammdarstellung eines Dieselmotors mit zugehöriger Abgaskatalysatoranlage,
- Fig. 2: eine schematische Längsschnittansicht durch eine motornah angeordnete Katalysatoreinheit der Abgaskatalysatoranlage von Fig. 1,
- Fig. 3: eine Draufsicht auf die Abgaseintrittsseite der Katalysatoreinheit von Fig. 2,
- Fig. 4: ein Diagramm zur Veranschaulichung der kohlenwasserstoffunterstützten NOₓ-Konversion in Abhängigkeit von der Temperatur für eine Katalysatoreinheit nach Art der Fig. 2 und 3,
- Fig. 5: eine schematische Draufsicht auf die Abgaseintrittsseite einer ersten Variante der Katalysatoreinheit der Fig. 2 und 3 und
- Fig. 6: eine schematische Draufsicht auf die Abgaseintrittsseite einer zweiten Variante der Katalysatoreinheit der Fig. 2 und 3.

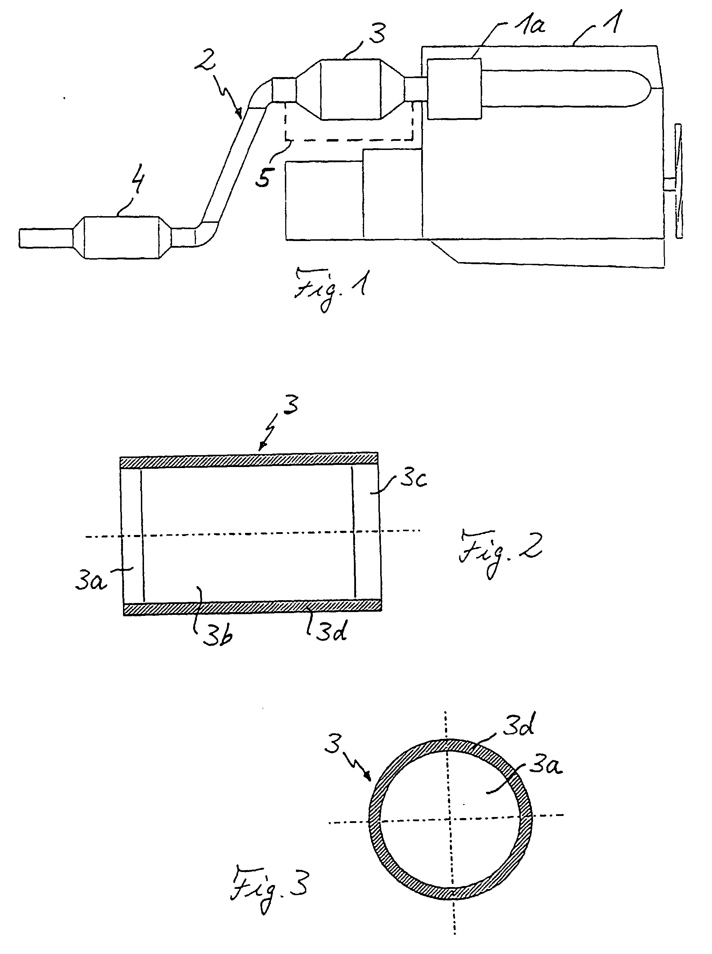

Fig. 1 zeigt einen Dieselmotor (1) mit Abgasturbolader (1a), an den sich eine Abgaskatalysatoranlage mit einem Abgasstrang (2) anschließt, in den seriell zwei separate Katalysatoreinheiten (3, 4) eingebracht sind. Der Dieselmotor (1) beinhaltet in nicht näher gezeigter, herkömmlicher Weise Mittel zur HC-Anreicherung des Dieselmotorabgases zwecks Unterstützung der Stickoxidumwandlung in der Abgaskatalysatoranlage, wobei diese Mittel von einer Nachspritzeinrichtung gebildet sind, mit der in den Brennraum jedes Zylinders über ein magnetisches Einspritzventil, das auch zur Einspritzung des Kraftstoffs für den Verbrennungsvorgang dient, eine Kraftstoffzusatzmenge nach Beendigung des eigentlichen Verbrennungsvorgangs eingespritzt wird. Diese nacheingespritzte Kraftstoffmenge wird folglich nicht mehr verbrannt und dient als HC-Anreicherungsmenge im Dieselmotorabgas, mit der die NOₓ-Konversion in einem gewissen Temperaturfenster merklich verbessert wird.

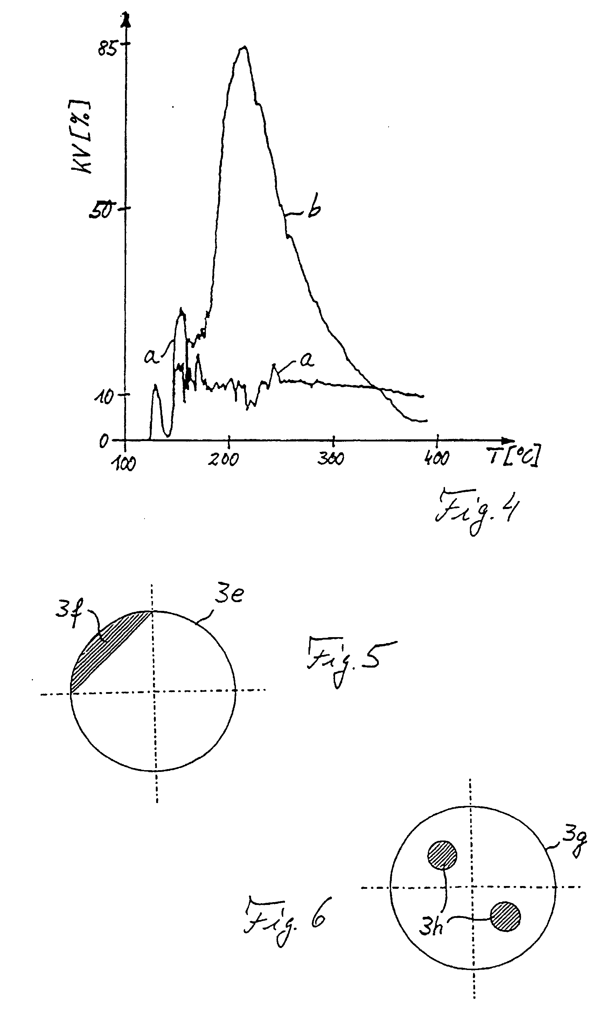

Ein Beispiel für dieses Verhalten ist diagrammatisch in Fig. 4 dargestellt. Die Kurve (a) gibt dort den NOₓ-Konversionsgrad (KV) in Abhängigkeit von der Temperatur für den Fall an, daß ein Dieselmotorabgas mit 340 ppm NOₓ mit 30 ppm eines Propen-Propan-Gemischs mit einem Mischungsverhältnis von 1/1 angereichert ist. Es zeigt sich, daß der NOₓ-Konversionsgrad (KV) im gesamten Temperaturbereich zwischen 100°C und 380°C relativ gering ist und überwiegend unter 20% liegt. Demgegenüber zeigt die Kurve (b) den NOₓ-Konversionsgrad (KV), der sich für ein Abgas mit demselben NOₓ-Gehalt von 340 ppm, jedoch einer Anreicherungsmenge von 1200 ppm des Propen-Propan-Gemischs im Mischungsverhältnis 1/1 ergibt. Ersichtlich führt diese erhöhte Propen-Propan-Anreicherung des Abgases zu einer deutlichen Steigerung der NOₓ-Konversionsrate in einem Temperaturfenster zwischen etwa 100°C und 300°C mit einem Spitzenwert von etwa 85%. Weitere Versuchsergebnisse zeigen, daß sich dieses Temperaturfenster mit effektiver NOₓ-Konversion durch Wahl unterschiedlicher Katalysatormaterialien und vor allem durch Wahl unterschiedlicher Beladungsdichten des gewählten Katalysatormaterials verschieben läßt. So führt eine Erhöhung der Beladungsdichte an Noₓ-konversionsaktivem Katalysatormaterial, beispielsweise Platin oder ein ähnliches Edelmetall, zu einer Verschiebung des aktiven Temperaturfensters in Richtung geringerer Temperaturen.

Diese Erkenntnis wird in der Abgaskatalysatoranlage von Fig. 1 dadurch ausgenutzt, daß jede der beiden Katalysatoreinheiten (3, 4) mehrstufig aufgebaut ist, wie dies für die vordere, motornah angeordnete Katalysatoreinheit (3) in Fig. 2 näher gezeigt ist. Wie aus den Fig. 2 und 3 zu erkennen, besteht diese motornahe Katalysatoreinheit (3) aus einer vorderen, relativ kurzen, ersten Stufe (3a), einer daran anschließendem, deutlich längeren, zweiten Stufe (3b) und einer an diese anschließenden, wiederum relativ kurzen, dritten Stufe (3c). Die erste Katalysatsorstufe (3a) beinhaltet eine Katalysatorbeladung mit Platin- oder einem anderen Noₓ-reduktionsaktiven Edelmetallmaterial mit einer hohen Beladungsdichte, was, wie oben ausgeführt, bedeutet, daß das aktive Temperaturfenster für die NOₓ-Konversion durch diese erste Katalysatorstufe (3a) in einem möglichst niedrigen Temperaturbereich liegt, der eine effektive NOₓ-Reduktion bereits wenig oberhalb der Raumtemperatur ermöglicht. Die geringe Länge dieser ersten Stufe (3a) bewirkt, daß nicht schon die gesamte, nacheingespritzte HC-Anreicherungsmenge im Abgas von der ersten Stufe (3a) verbraucht wird, sondern eine ausreichende HC-Menge im Abgas für die nachfolgenden Katalysatorstufen (3b, 3c) der Katalysatoreinheit (3) übrig bleibt, damit auch in diesen Stufen (3b, 3c) noch eine effektive NOₓ-Konversion stattfinden kann.

Die zweite, mittlere Katalysatorstufe (3b) nimmt den größten Teil der Länge der Katalysatoreinheit (3) ein und beinhaltet eine Beladung mit demselben Katalysatormaterial wie die erste Stufe (3a), jedoch mit deutlich geringerer Beladungsdichte. Typischerweise ist die Beladungsdichte in der vorderen Katalysatorstufe (3a) um den Faktor acht bis zehn höher als diejenige der mittleren Stufe (3b), deren Beladungsdichte mit Platin oder Palladium beispielhaft zwischen 10g/ft³ bis 100g/ft³, z.B. 50g/ft³, liegt. Wie oben erwähnt, bedeutet dies, daß die mittlere Katalysatorstufe (3b) in einem höheren Temperaturbereich NOₓ-reduktionsaktiv ist als die erste Stufe (3a). Die zweite Stufe (3b) ist dabei abgestimmt an die erste Stufe (3a) so ausgelegt, daß ihr aktives Temperaturfenster an dasjenige der ersten Stufe (3a) anschließt, so daß mit den beiden seriellen Katalysatorstufen (3a, 3b) insgesamt ein verhältnismäßig großer Temperaturbereich zur effektiven NOₓ-Konversion abgedeckt wird. Zusätzlich ist die mittlere Katalysatorstufe (3b) mit einem herkömmlichen HC-Adsorbermaterial zwecks temporärer HC-Zwischenspeicherung belegt. Die abschließende dritte Katalysatorstufe (3c) ist ungefähr identisch zur ersten Katalysatorstufe (3a) ausgelegt, d.h. sie enthält dasselbe, sehr Noₓ-reduktionsaktive Katalysatormaterial mit hoher Beladungsdichte wie die erste Stufe (3a), z.B. auf einem Zeolith-Träger, und weist auch eine vergleichbare, geringe Länge in Abgasströmungsrichtung auf.

Die drei aufeinanderfolgenden Katalysatorstufen (3a, 3b, 3c) mit NOₓ-reduktionsaktiver Katalysatorbeladung sind von einem als äußerer Ringkanal (3d) ausgeführten Längsströmungskanal umgeben, der in den Fig. 2 und 3 schraffiert wiedergegeben ist und sich durchgängig vom eintrittsseitigen zum austrittsseitigen Stirnende der Katalysatoreinheit (3) erstreckt. Im Volumen dieses äußeren Ringkanals (3d) befindet sich kein NOₓ-reduktionsaktives Katalysatormaterial, während optional eine Beladung mit HC-Adsorbermaterial vorgesehen sein kann. Der durch diesen äußeren Ringkanal (3d) strömende Abgasanteil erfährt somit dort keine NOₓ-Konversion und passiert samt den enthaltenen Stickoxiden und der HC-Anreicherungsmenge, gegebenenfalls abzüglich eines dort durch Adsorption zwischengespeicherten HC-Anteils, unbehandelt die erste Katalysatoreinheit (3). Dieser Abgasanteil kann dann in der nachgeschalteten, zweiten Katalysatoreinheit (4) behandelt, insbesondere NOₓ-rezudiert werden. Der äußere Ringkanal (3d) bildet damit eine in die vordere Katalysatoreinheit (3) integrierte Bypassleitung für den von der hinteren Katalysatoreinheit (4) zu reinigenden Abgasanteil. Alternativ zu dieser integrierten Bypassleitung in Form des äußeren Ringkanals (3d) kann eine externe, die motornahe Katalysatoreinheit (3) umgehende Bypassleitung (5) vorgesehen sein, wie in Fig. 1 gestrichelt angedeutet.

Die abschließende Konversion eines restlichen NOₓ-Abgasanteils in der nachgeschalteten, zweiten Katalysatoreinheit (4) ermöglicht es, die vordere, erste Katalysatoreinheit (3) relativ klein zu bauen, so daß sie auch bei beengten Platzverhältnissen sehr nah am Abgasaustritt des Dieselmotors (1) angeordnet werden kann und sich dennoch ein hohes Gesamtkatalysatorvolumen erreichen läßt. Solche hohen Katalysatorvolumina sind zur Erzielung kleiner Abgas-Raumgeschwindigkeiten erwünscht, da dies einer guten Abgasschadstoffkonversion förderlich ist. Des weiteren zeigt sich, daß durch diesen Aufbau der Abgaskatalysatoranlage mit geringer Abgas-Raumgeschwindigkeit und durch die nacheingespritzte HC-Anreicherungsmenge eine bemerkenswert gute Verbrennung von angelagerten Rußpartikeln selbst in Motordrehzahlbereichen erzielt wird, in denen dies bei herkömmlichen Anlagen nicht der Fall ist. Der Aufbau der nachgeschalteten Katalysatoreinheit (4) entspricht vorzugsweise demjenigen der vorderen Katalysatoreinheit (3), wie er oben zu den Fig. 2 und 3 beschrieben ist, d.h. bestehend aus einer vorderen, kürzeren, hochaktiven Stufe, einer mittleren, längeren, weniger aktiven Stufe und einer wiederum aktiveren, kürzeren, hinteren Stufe, mit der Ausnahme, daß bei dieser Katalysatoreinheit (4) der als integrierte Bypassleitung fungierende, äußere Ringkanal (3d) wegfällt.

Nach einem Start des Dieselmotors (1) ist aufgrund der noch niedrigeren Abgastemperatur zunächst vor allem die vordere, erste Stufe (3a) der motornahen Katalysatoreinheit (3) hinsichtlich Schadstoffumwandlung, insbesondere NOₓ-Reduktion, aktiv. Die in demjenigen Abgasanteil, der durch den äußeren Ringkanal (3d) der motornahen Katalysatoreinheit (3) strömt, enthaltenen Kohlenwasserstoffe werden durch das gegebenenfalls dort vorgesehene HC-Adsorbermaterial und im übrigen durch das in der mittleren Stufe der nachgeschalteten Katalysatoreinheit (4) enthaltene HC-Adsorbermaterial zwischengespeichert. Ebenso wird der durch die erste Stufe (3a) der motornahen Katalysatoreinheit (3) hindurchströmende und dort nicht umgewandelte HC-Anteil in der nachfolgenden, zweiten Katalysatorstufe (3b) zwischengespeichert.

Sobald die Abgastemperatur in dieser mittleren Stufe (3b) sowie der hinteren Stufe (3c) der motornahen Katalysatoreinheit (3) in deren aktives Temperaturfenster gelangt, setzt auch in diesen beiden Stufen (3b, 3c) die Schadstoffkonversion ein, wobei die zwischengespeicherten Kohlenwasserstoffe desorbiert werden und die NOₓ-Reduktion fördern. Ein relativ frühes Einsetzen der Katalysatoraktivität der mittleren Stufe (3b) wird von der Tatsache unterstützt, daß sich durch die bereits bei relativ niedrigen Temperaturen aktive Schadstoffkonversion in der vorgeschalteten ersten Stufe (3a) die Abgastemperatur etwas erhöht, so daß das Abgas bereits mit dieser erhöhten Temperatur in die mittlere Stufe (3b) eintritt. Zudem bewirkt die Temperatursteigerung durch die Schadstoffkonversion in der motornahen Katalysatoreinheit (3) insgesamt, daß das Abgas aus dieser vorderen Katalysatoreinheit (3) mit vergleichsweise hoher Temperatur austritt und damit die nachgeschaltete Katalysatoreinheit (4) entsprechend mit einer noch relativ hohen Eintrittstemperatur erreicht, so daß auch dort eine effektive Schadstoffkonversion unter Ausnutzung von im wesentlichen der gesamten Länge der Katalysatoreinheit (4) ablaufen kann. Es versteht sich, daß die Längen der beiden Katalysatoreinheiten (3, 4) und ihrer einzelnen Stufen (3a, 3b, 3c) so abgestimmt sind, daß jedenfalls bei warmgelaufenen Motor (1) alle Katalysatorstufen (3a, 3b, 3c) beider Katalysatoreinheiten (3, 4) zur Schadstoffkonversion und insbesondere zur NOₓ-Reduktion beitragen.

Die durch das eingebrachte HC-Adsorbermaterial ermöglichte HC-Zwischenspeicherung wird bei dieser Abgaskatalysatoranlage nicht nur während der Kaltstartphase, sondern auch bei warmgelaufenem Motor zur Erzielung einer gleichbleibend hohen NOₓ-Konversionsrate bei NOₓ-Konzentrationenschwankungen im Abgas nützlich, die aus Motorlastschwankungen resultieren. In Betriebsphasen mit geringerer Motorlast und damit geringerer NOₓ-Konzentration werden weniger Kohlenwasserstoffe zur NOₓ-Reduktion benötigt und daher zwischengespeichert, um in Betriebsphasen mit höherer Motorlast die dann vorliegende erhöhte Stickoxidmenge im Abgas vollständig umwandeln zu können, ohne daß hierfür zwingend die nacheingespritzte HC-Anreicherungsmenge lastwechselsynchron verändert werden muß.

In Fig. 5 ist eine Variante (3e) der motornahen Katalysatoreinheit (3) dargestellt, die hinsichtlich der Gestaltung des nicht mit Katalysatormaterial beladenen Längsströmungskanals modifiziert sind. Bei dieser Katalysatoreinheit (3e) besteht dieser Längsströmungskanal mit optionaler HC-Adsorbermaterialbelegung aus einem im Querschnitt segmentförmigen Längskanal (3f), dessen Ausdehnung in Umfangsrichtung auf 90° beschränkt ist.

Fig. 6 zeigt eine weitere Variante (3g) für die motornahe Katalysatoreinheit (3), bei welcher der Längsströmungskanal ohne Katalysatormaterialbeladung und mit optionaler HC-Adsorbermaterialbelegung von zwei voneinander getrennten, im Querschnitt kreisförmigen Längskanälen (3h) gebildet ist. Das Verhältnis des durch die vom jeweiligen Längsströmungskanal (3d, 3f, 3h) gebildete, integrierte Bypassleitung hindurchströmenden Abgases zu demjenigen, das durch den übrigen, konversionsaktiven Teil der ersten Katalysatoreinheit (3, 3e, 3g) hindurchströmt, kann mittels entsprechender Wahl der Querschnittsfläche für den Längsströmungskanal (3d, 3f, 3h) bei gegebener Gesamtquerschnittsfläche der Katalysatoreinheit (3, 3e, 3g) in gewünschter Weise eingestellt werden kann.

Es versteht sich, daß neben der oben beschriebenen Abgaskatalysatoranlage weitere erfindungsgemäße Anlagen realisierbar sind, z.B. solche, bei denen die einzelnen Stufen (3a, 3b, 3c) der gezeigten Katalysatoreinheiten (3, 4) ihrerseits als selbständige Katalysatoreinheiten gestaltet sind. Außerdem kann je nach Anwendungsfall auch nur eine einzige Katalysatoreinheit vorgesehen sein, die wenigstens die beschriebene, hochaktive, vordere Katalysatorstufe (3a) mit geringerer Länge und die nachgeschaltete, zweite Katalysatorstufe (3b) mit geringerer Katalysatoraktivität und größerer Länge umfaßt.

## Patentansprüche

1. Abgaskatalysatoranlage für einen Dieselmotor, der Mittel zur Anreicherung des Dieselmotorabgases mit Kohlenwasserstoffen besitzt, indem eine Kraftstoffzusatzmenge nach Beendigung des eigentlichen Verbrennungsvorgangs eingespritzt wird, die eine Stickoxidumwandlung im Katalysator unterstützen, mit
- einer ersten Katalysatorstufe (3a), die zur NOₓ-Umwandlung in einem ersten Temperaturbereich unter Ausnutzung eines ersten Teils der HC-Anreicherungsmenge im Abgas ausgelegt ist und eine hierfür geeignete, erste Katalysatormaterialbeladung aufweist, und
- einer der ersten in Abgasströmungsrichtung nachgeschalteten zweiten Katalysatorstufe (3b), die zur NOₓ-Umwandlung in einem zweiten Temperaturbereich unter Ausnutzung eines zweiten Teils der HC-Anreicherungsmenge im Abgas ausgelegt ist und eine hierfür geeignete zweite Katalysatormaterialbeladung aufweist,
**dadurch gekennzeichnet,**
**dass** die zweite Katalysatorstufe (3b) zur NOₓ-Umwandlung in einem gegenüber dem ersten Temperaturbereich der ersten Katalysatorstufe (3a) höheren zweiten Temperaturbereich ausgelegt ist.

2. Abgaskatalysatoranlage nach Anspruch 1, weiter
**gekennzeichnet durch**
eine der zweiten in Abgasströmungsrichtung nachfolgende, dritte Katalysatorstufe (3c), die eine gegenüber der zweiten NOₓ-umwandlungsaktivere, dritte Katalysatormaterialbeladung aufweist.

3. Abgaskatalysatoranlage nach Anspruch 1 oder 2, weiter
**dadurch gekennzeichnet, daß**
wenigstens in der zweiten Katalysatorstufe (3b) ein HC-Adsorbermaterial vorgesehen ist.

4. Abgaskatalysatoranlage nach einem der Ansprüche 1 bis 3, weiter
**dadurch gekennzeichnet, daß**
sie eine motornah angeordnete, erste Katalysatoreinheit (3) und eine dieser in Abgasströmungsrichtung nachfolgende, separate, zweite Katalysatoreinheit (4) umfaßt, dic beide wenigstens zweistufig mit der vorderen, ersten Katalysatorstufe (3a) höherer Katalysatoraktivität und niedrigerem Aktivitätstemperaturbereich sowie der nachfolgenden, zweiten Katalysatorstufe (3b) mit geringerer Katalysatoraktivität und höherem Aktivitätstemperaturbereich ausgeführt sind.

5. Abgaskatalysatoranlage nach Anspruch 4, weiter
**gekennzeichnet durch**
eine Bypassleitung (3d, 5), welche die mit Katalysatormaterial beladenen Zonen der Katalysatorstufen (3a, 3b, 3c) der motornahen Katalysatoreinheit (3) umgeht.

6. Abgaskatalysatoranlage nach einem der Ansprüche 1 bis 5, weiter
**dadurch gekennzeichnet, daß**
wenigstens eine der in Abgasströmungsrichtung einer nachfolgenden Katalysatorstufe vorgeschalteten Katalysatorstufe einen nicht mit NOₓ-umwandlungsaktivem Katalysatormaterial beladenen Längsströmungskanal (3d) aufweist, der optional mit HC-Adsorbermaterial belegt ist.

7. Abgaskatalysatoranlage nach einem der Ansprüche 1 bis 6, weiter
**dadurch gekennzeichnet, daß**
die Anlage so ausgelegt ist, daß durch eine HC-Nacheinspritzung in der Anlage Temperaturen erzeugt werden, die zur Verbrennung von auf der Katalysatoroberfläche angelagerten festen Rußpartikel ausreichen.

## Claims

1. Exhaust catalyzer unit, for a diesel engine, that has means, that support conversion of the nitrogen oxide in the catalyzer, for enriching the diesel engine exhaust with hydrocarbons, in that an additional quantity of fuel is injected after termination of the actual combustion process, with
- a first catalytic stage (3a), that is designed for NOₓ-conversion in a first temperature area, with use of a first section of the HC-enrichment quantity in the exhaust, and that has a first loading of catalytic material that is suitable for this, and
- as seen in the direction of the exhaust flow, a subsequent, second catalytic stage (3b), that is designed for NOₓ-conversion in a second temperature range with use of a second part of the HC-enrichment quantity in the exhaust gas and that has a second loading of catalytic material that is suitable for this,
**characterized in that**,
the second catalyzer stage (3b) is designed for NOₓ-conversion in a higher temperature-range than the first temperature-range of the first catalyzer stage (3a).

2. Exhaust catalyzer unit in accordance with claim 1, further
**characterized in that** there is a third catalyzer stage (3c) that follows the second one in the direction of flow of the exhaust, and that has a third loading of catalytic material that is more active in converting NOₓ in relation to the second catalyzer stage.

3. Exhaust catalyzer unit in accordance with claim 1 or 2, further
**characterized in that**
there is, at least in the second catalyzer stage (3b), an HC-adsorbent material.

4. Exhaust catalyzer unit in accordance with claims 1 to 3, further
**characterized in that** it comprises a first catalyzer unit (3), which is disposed close to the engine, and, as seen in the direction of flow of the exhaust, a following, second, separate catalyzer unit (4), both of these units having at least two stages with the front, first catalyzer stage (3a) showing a higher level of catalytic action and a lower activity-temperature range, and the second catalyzer stage (3b) showing a lower level of catalyzer activity and a higher activity-temperature range.

5. Exhaust catalyzer unit in accordance with claim 4, further
**characterized by**
a bypass conduit (3d, 5) that surrounds the areas, of the catalyzer stages (3a, 3b, 3c) of the catalyzer unit (3) that is placed close to the engine, that carry the catalytic material.

6. Exhaust catalyzer unit in accordance with one of claims 1 to 5, further
**characterized in that**
at least one of the catalyzer stages coming before a following catalyzer stage has a longitudinal flow channel (3d) that is loaded with NOₓ-converting catalytic material and that can optionally be lined with HC-adsorbent material.

7. Exhaust catalyzer unit in accordance with one of claims 1 to 6, further
**characterized in that** the unit is so designed such that temperatures, which are sufficient for combustion of solid rust particles trapped on the surface of the catalyzer, are produced in the unit through subsequent injection of HC's.

## Revendications

1. Installation de catalyseur des gaz d'échappement pour un moteur diesel, qui présente des moyens destinés à enrichir les gaz d'échappement du moteur diesel en hydrocarbures, en injectant une quantité de carburant à la fin du processus caractéristique de combustion, lesquels moyens aident à transformer le dioxyde d'azote dans le catalyseur, comprenant
- une première cellule de catalyseur (3a), qui est prévue pour la transformation du NOₓ dans une première zone de température, en utilisant une première partie de la quantité d'enrichissement en HC dans les gaz d'échappement, et qui comprend une première charge de matériau de catalyseur appropriée pour ceci, et
- une deuxième cellule de catalyseur (3b) placée derrière la première dans le sens du courant des gaz d'échappement, qui est prévue pour la transformation du NOₓ dans une seconde zone de température en utilisant une seconde partie de la quantité d'enrichissement en HC dans les gaz d'échappement, et qui comprend une deuxième charge de matériau de catalyseur appropriée pour ceci,
**caractérisé en ce que**
la deuxième cellule de catalyseur (3b) est prévue pour la transformation du NOₓ dans une seconde zone de température supérieure à la première zone de température de la première cellule de catalyseur (3a).

2. Installation de catalyseur des gaz d'échappement selon la revendication 1, **caractérisé en outre par**
une troisième cellule de catalyseur (3c) placée derrière la deuxième dans le sens du courant des gaz d'échappement, qui comprend une troisième charge de matériau de catalyseur plus active dans la transformation du NOₓ que la deuxième.

3. Installation de catalyseur des gaz d'échappement selon la revendication 1 ou 2, **caractérisé en outre**
**en ce qu'**au moins un matériau adsorbant des HC est prévu dans la deuxième cellule de catalyseur (3b).

4. Installation de catalyseur des gaz d'échappement selon l'une des revendications 1 à 3, **caractérisé** outre
en ce qu'elle comprend une première unité de catalyseur (3) disposée près du moteur, et une seconde unité de catalyseur (4) séparée, suivant la première dans la direction du courant des gaz d'échappement, qui sont réalisées toutes les deux au moins en deux cellules, avec la première cellule de catalyseur (3a) avant, présentant une activité de catalyseur plus élevée et une zone de température d'activité plus basse, ainsi qu'avec la seconde cellule de catalyseur (3b) suivant la première, présentant une activité de catalyseur plus réduite et une zone de température d'activité plus élevée.

5. Installation de catalyseur des gaz d'échappement selon la revendication 4, **caractérisé en outre par**
une dérivation (3d, 5), laquelle contourne les zones chargées en matériau de catalyseur des cellules de catalyseur (3a, 3b, 3c) de l'unité de catalyseur (3) proche du moteur.

6. Installation de catalyseur des gaz d'échappement selon l'une des revendications 1 à 5,
**caractérisé en outre**
**en ce qu'**au moins une de la cellule de catalyseur placée devant une cellule de catalyseur placée derrière dans le sens du courant des gaz d'échappement présente un canal d'écoulement longitudinal (3d) non chargé en matériau de catalyseur activant la transformation du NOₓ, lequel canal est chargé en option en matériau adsorbant des HC.

7. Installation de catalyseur des gaz d'échappement selon l'une des revendications 1 à 6, **caractérisé en outre**
**en ce que** l'installation présente des dimensions telles que des températures sont crées par une réinjection des HC dans l'installation, lesquelles températures suffisent à la combustion des particules de noir de fumée rigidement fixées sur la surface supérieure du catalyseur.
